# EUROPEAN PATENT APPLICATION

(11) **EP 4 711 826 A1**
(43) Date of publication of application: **18.03.2026**
(21) Application number: 24425043.7
(22) Date of filing: 13.09.2024
(51) Int. Cl.: G02B 5/02, G02C 7/10, G02C 7/14

(54) **DIFFUSE REFLECTIVE OPTICAL ARTICLE AND METHOD FOR MANUFACTURING THE SAME**

(71) Applicant: BARBERINI, S.p.A., 64028 Silvi (TE) (IT)
(72) Inventor: Libertini, Francesco, 65010 Spoltore (PE) (IT); De Luca, Francesco, 65013 Città Sant'Angelo (PE) (IT)
(74) Representative: Biallo, Dario

(57) **Abstract**

The present invention relates to a diffuse reflective optical article, in particular to an diffuse reflecting glass lens.

Furthermore, the present invention also relates to a method for manufacturing the aforementioned optical article.

## Description

### Field of the invention

The present invention relates to a diffuse reflective optical article, in particular to a diffuse reflective opaque glass lens.

Furthermore, the present invention also relates to a method for manufacturing the aforementioned optical article.

### Background of the invention

As is known, sunglasses form a barrier to UV (ultraviolet) rays. Many studies have shown that UV rays may engender lesions, inflammations or degradation of the cornea, of the crystalline lens or of the retina. In order to avoid these effects and above all a modification of the eye that could decrease vision long-term, people are increasingly encouraged to wear sunglasses in order to avoid exposure to too high a light intensity.

In addition, sunglasses also allow discomfort glare to be combatted, thereby increasing safety when driving or during sporting activities, for example skiing or other potentially risky activities.

In the state of the art, it is known in the field of plastic substrate lenses, to use a manufacturing process intended to impart to the plastic lens, a diffuse reflexion on the wearer side, defined as a matte or silky effect, that can have a colored reflexion.

### Summary of the invention

In view of this, the Applicant has set the object of obtaining an optical article, in particular a glass lens, having matt mirroring effect, and suitable for the vision of the wearer, while having minor or even no incidence in the manufacturing process of manufacture, compared to standard process of manufacturing mirror glass lenses.

Another object of the present invention is to provide a method for the production of the aforementioned article.

These and other objects according to the present invention are achieved by an optical article as set out in claim 1 and by a method for its manufacturing, as set out in claim 12.

The optical article of the invention is characterized by an optimal matt mirror effect for an observer, and an optimal haze for the wearer, measured as haze (H) value, i.e. an haze value less than 2, preferably it is comprised between 1.1 and 1.9, preferably between 1.4 and 1.8, even more preferably between 1.5 and 1.8.

Further features of the article and of the method are the subject-matter of the dependent claims.

In the present description and in the claims that follow, the haze parameters are obtained by the tool "Haze-gard plus" which is a stationary instrument designed to measure the appearance of glass and of films, packaging and parts made of plastic and other transparent materials. The speciment surface is illuminated perpendicularly, and the transmittd light is measured photoelectrically, using an integrating sphare (0°/ diffuse geometry). The spectral sensitivity conforms to CIE standard spectral value function y, under standard light C.

Three parameters (total transmittance, haze, clarity) permit visual appearance to be characterized fully and objectively.

In the present description and in the claims that follow, the definitions of the numerical intervals include the individual values within the interval and its extremes, unless otherwise specified.

In the present description and in the claims that follow, the term "comprising" also includes the terms "essentially consisting of" or "consisting of".

In the present description and in the claims that follow, the glass base elements of the optical article can consist of a mineral glass, e.g. a silica glass or borosilicate glass.

Also, as used herein, a "transparent substrate/base element" is understood to be transparent, when the observation of an image through said substrate is perceived with no significant loss of contrast, that is, when the formation of an image through said substrate is obtained without adversely affecting the quality of the image.

For the purposes of the present invention, an optical article is defined by, but not exclusive of corrective lenses, non-corrective lenses, contact lenses, intra-ocular lenses, magnifying lenses, protective lenses, and visors, possibly containing photochromic compounds within a coating, the lens material, a film, or any adjacent layer.

As used herein, the rear (or the inner or concave) face of the base element/substrate is intended to mean the face which, when using the article, is the nearest from the wearer's eye. It is generally a concave face. On the contrary, the front face of the substrate/base element (or convex), is the face which, when using the article, is the most distant from the wearer's eye. It is generally a convex face.

Optical article according to the invention comprises sunglasses, i.e. they are optical articles that absorb in the visible, for example thanks to absorbing dyes contained in the substrate, and/or thanks to specific coatings, including reflective coatings, when containing absorbing species such as metallic containing layers, which means, in the context of the present application, the transmission factor Tᵥ can be lower than or equal to any one of the following values: 79%, 78 %, 43%, 18%, 8%, 5%.

Accordingly, different tints of sunglasses with different visible light mean transmission factors Tᵥ can be obtained:
- from 43 to 80 % (known as sunglasses of category or class 1),
- from 18 to 43 % (known as sunglasses of class 2),
- from 8 to 18% (known as sunglasses of class 3),
- below 8 % (known as sunglasses of class 4).

For the purposes of the present invention, the reflective layer can comprise a monolayer coating which means a coating composed of a thin layer, comprising metallic species, such as aluminium.

Furthermore, the reflective layer can be a multilayer coating, preferably a multilayer "interferential (IF) coating" which means a coating, generally composed of interferential thin layers and comprises at least one layer having a low refractive index which is lower than 1.55, defined as "LI layer", and at least one layer having a high refractive index which is equal to or higher than 1.55, defined as "HI layer.

In the present application, when an optical lens comprises one or more coatings onto the surface thereof, the expression "to deposit a layer, a sheet or a coating onto the article" is intended to mean that a layer, a sheet or a coating is deposited onto the external (exposed) surface of the outer coating of the article, that is to say its coating that is the most distant from the substrate.

Unless otherwise indicated, a coating, a layer or a sheet, that is said to be "on" a substrate/base element or deposited "onto" a substrate/base element" is defined as a coating, a layer or a sheet, which (i) is positioned above the substrate/base element, (ii) is not necessarily in contact with the substrate/base element, that is to say one or more intermediate coatings/sheets may be arranged between the substrate/base element and the coating or sheet in question, and (iii) does not necessarily completely cover the substrate/base element.

In a preferred embodiment, the coating on a substrate/base element or deposited onto a substrate/base element is in direct contact with this substrate.

When "a layer/sheet 1 is lying under a layer 2/sheet 2", it is intended to mean that layer/sheet 2 is more distant from the substrate than layer 1/sheet 1 respectively.

Also, unless stated otherwise, all thicknesses disclosed in the present application relate to physical thicknesses.

As used herein, a layer of the interferential coating is defined as having a thickness higher than or equal to 1 nm. Thus, any layer having a thickness lower than 1 nm will not be considered when counting the number of layers in the reflective coating. A sub-layer (having generally a physical thickness of 150 nm) is also not considered when counting the number of layers of the interferential coating.

Unless otherwise specified, the refractive indexes referred to in the present application are expressed at 25 °C at a wavelength of 550 nm.

The colorimetric coefficients of the optical article of the invention in the international colorimetric system CIE L*a*b* (1976) (such as the Chroma C* and the hue "h") are calculated between 380 and 780 nm, taking the standard illuminant D 65 and the observer into account (angle of 10°). The observer is a "standard observer" as defined in the international colorimetric system CIE L*a*b*. Indeed, in the CIE L*a*b* space, it is possible to express not only overall variations in color, but also in relation to one or more of the parameters L*, a* and b*. This can be used to define new parameters and to relate them to the attributes of the visual sensation. Clarity, related to luminosity, is directly represented by the value of L*. Chroma: C* = (a*² + b*² )^{1/2} defines the chromaticness. The angle of hue: h = tg-1 (b*/a*) (expressed in degrees); related to hue.

According to the invention, the colorimetric measurements (in reflection) of the at least one face coated with the interferential multilayered coating of the invention (hue angle h, and chroma C* in the international colorimetric CIE (L*, a*, b*) space) were carried out with a Zeiss spectrophotometer, taking into account the standard illuminant D65, and the standard observer 10° (for h and C*) . They are provided for an angle of incidence of 15° or 35°.

According to the invention, the "angle of incidence (symbol 0)" is the angle formed by a ray light incident on an ophthalmic lens surface and a normal to the surface at the point of incidence. The ray light is for instance an illuminant light source, such as the standard illuminant D65 as defined in the international colorimetric CIE L*a*b* (1976). Generally, the angle of incidence changes from 0° (normal incidence) to 90° (grazing incidence). The usual range for angle of incidence is from 0° to 75° and is typically 15° for the present invention.

The interferential coating according to the invention has colorimetric characteristics.

Especially, the interferential coating may have a residual reflected color (i.e.: the reflected tint of the interferential coating that may be perceived by an observer). It is possible to prepare interferential coatings without limitation as regards their hue angle h (0° to 360°).

For instance, the hue angle h measured in the CIE L*, a*, b* color system may be ranged:
- from 210° and 330°, thereby corresponding to "blue" and derivatives residual reflection colors, including a more "blue-purple" or even "purple" residual reflection color;
- from 331° to 60°, thereby corresponding to "red" and derivatives residual reflection colors, including "orange", "pink" or "pink gold" residual reflection color,
- from 61° and 95°, thereby corresponding to a "yellow" or gold residual reflection color,
- from 96° and 209°, thereby corresponding to a "green" residual reflection color.

In particular, the interferential coating generally has a Chroma C* measured in the CIE L*, a*, b* color system that has a high value. In general, the Chroma C* of colored reflected colors (blue, green, yellow, red and their derivatives) is higher than or equal to 2, . On the contrary, the reflected light of the interferential will be perceived as "silver" (grey or neutral in color) when the chroma is low i.e. below or equal to 1.9, whatever the hue angle value.

The characteristics and the advantages of the article and of the method according to the present invention will be more evident from the following description, illustrative and non-limiting, referring to the attached schematic drawings.

### Brief description of drawings

- figure 1 is an enlarged section view of the lens according to an embodiment of the invention; and
- figure 2 is a scheme of the method according to an embodiment of the invention.

### Detailed description of the invention

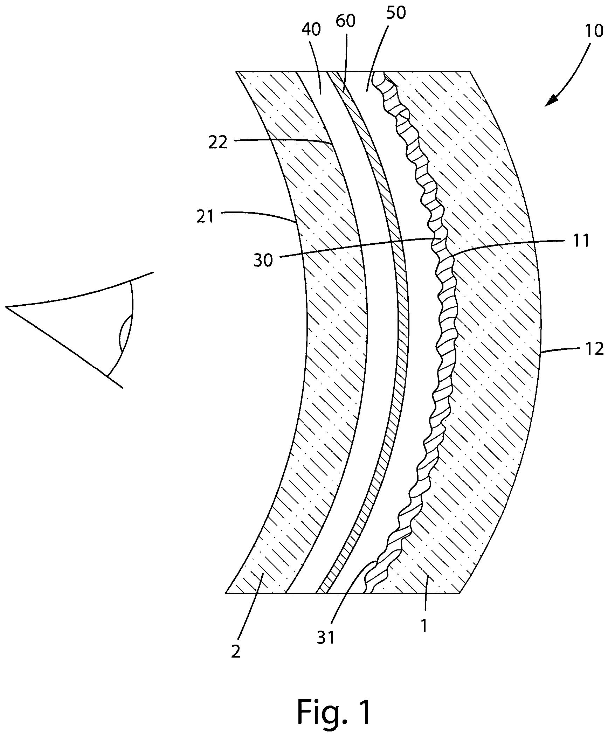

With reference to the figure 1, a diffuse reflective lens is shown, generically indicated by reference number 10.

The lens 10 comprises:
- a front glass base element 1 comprising a rear surface 11, and a front surface 12 opposite to the rear surface 11, the rear surface 11 being textured and rough, the front surface 12 being smooth and configured for the specular transmission of incident light,
- a multilayered reflective coating 30 deposited on the rear surface 11 of the front glass base element 1, which takes the form of the textured and rough rear surface 11 and is configured for reflecting light in a diffuse manner,
- two adhesive layers 40,50 of optical quality applied at the rear side 31 of the multilayered coating 30, the rear side 31 of the multilayered coating 30 being on the opposite side with respect to the front glass base element 1,
- a polarizing film 60 interposed between the two adhesive layers 40,50of optical quality,
- a rear glass base element 2 intended to be closest to an individual's eyes when the optical article is worn by a subject, comprising a rear surface 21 and a front surfaces 22, wherein the front surface 22 adheres to the multilayered reflective coating 30 via the adhesive layers 40, 50 and the rear surface 21 is opposite to the front surface 22, both surfaces 21,22 being smooth and configured for the specular transmission of incident light.

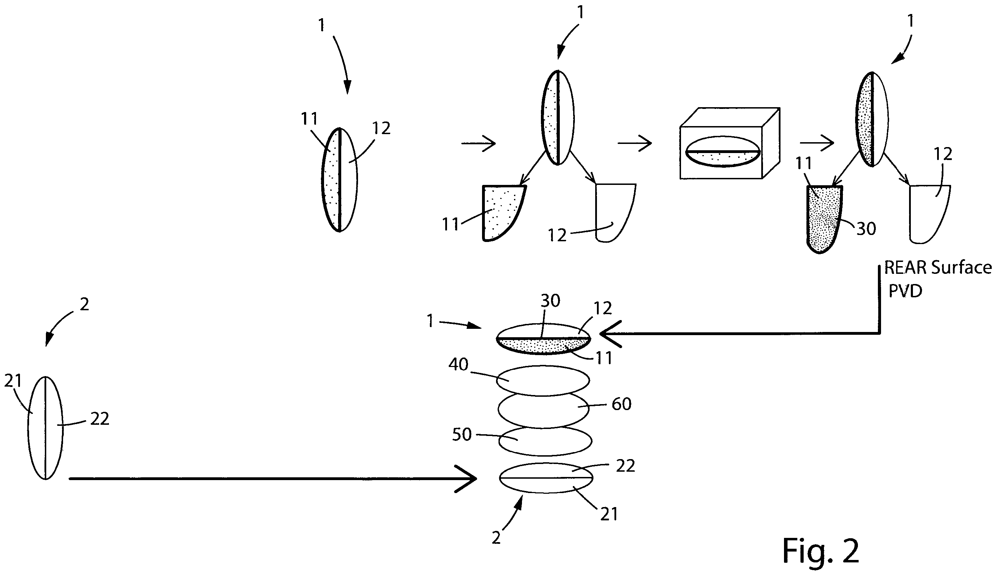

With reference to figure 2, a scheme of the method for manufacturing an optical article according to the invention is shown, such method comprising:
- providing an optical article 10 comprising a front glass base element 1 and a rear glass base element 2 (RG 2), each comprising a rear surface 11;21 and a front surfaces 12;22,
- roughing, lapping and polishing the rear and front surfaces 21, 22 of the rear base element 2 and the front surface 12 of the front glass base element 1, defining smooth surfaces allowing a specular transmission of incident light,
- roughing, lapping and not polishing the rear surface 11 of the front glass base element 1 defining a textured and rough surface,
- standard chemical hardening (STD),
- depositing a reflective coating 30 on the rear lapped surface 11 of the front base element 1 (REAR PVD), conforming the shape of the textured surface 11, for reflecting light in a diffuse manner,
- applying a first adhesive layer or glue of optical quality 40at the rear side 31 of the multilayered coating 30, wherein the rear side 31 of the multilayered coating 30 is in the opposite side with respect to the front glass base element 1,
- applying a polarizing film 60 on the first adhesive 40, and applying a second adhesive layer of optical quality 50, the polarizing film 60 being interposed between the two layers 40,50 of glue of optical quality,
- fixing the rear glass base element 2 to the reflective coating 30 via the adhesive layer 50.

Therefore, according to a first aspect, the present invention refers to an optical article comprising:
- a front glass base element 1 comprising a rear surface 11, and a front surface 12 opposite to the rear surface 11, the front surface 12 being smooth and configured for the specular transmission of incident light,
- a reflective coating 30 deposited on the rear surface 11 of the front glass base element 1,
- at least one adhesive layer 40,50 of optical quality applied at the rear side 31 of the reflective coating 30, wherein the rear side 31 of the reflective coating 30 is in the opposite side with respect to the front glass base element 1,
- a rear glass base element 2 intended to be closest to an individual's eyes when the optical article is worn by a subject, comprising a rear surface 21 and a front surfaces 22, wherein the front surface 22 adheres to the reflective coating 30 via said at least one adhesive layer 40, 50 and the rear surface 21 is opposite to the front surface 22, both surfaces 21,22 being smooth and configured for the specular transmission of incident light,
wherein
the rear surface 11 of the front glass base element 1 is textured and rough,
the reflective coating 30 takes the form of the textured and rough rear surface 11 and is configured for reflecting light in a diffuse manner,
and wherein the haze value of the optical article is less than 2.

Advantageously, the haze value of the optical article is comprised between between 1.1 and 1.9, preferably between 1.4 and 1.8, even more preferably between 1.5 and 1.8. The applicant has surprisingly discovered that optical articles comprising the above mentioned elements, and an haze value in this range ensures that a matte effect can be observed on the obtained optical product.

Preferably, in the article according to the invention the roughness Ra of the rear surface 11 of the front base element 1 ranges from 0.30 to 0.45 µm, preferably from 0.35 to 0.4 um, and/or the roughness Rq of the rear surface 11 of the front base element 1 ranges from 0.40 to 0.55 µm , preferably from 0.45 to 0.50 µm, and/or the roughness RDq of the rear surface 11 of the front base element 1 ranges from 0.25 to 0.35, preferably from 0.27 to 0.30.

In particular, the roughness Ra, and/or Rq and/or RDq of both surfaces of the rear glass base element 2, and the front surface 12 of the front glass base element 1 can range from 0.01 to 0.10, preferably from 0.01 to 0.05.

For the purposes of the present invention Ra, Rq, RDq parameters are included in BS EN ISO 4287:2000 British standard, identical with the ISO 4287:1997 standard.

The article of the invention is preferably characterized by a Tv value typical of sunglasses, with a transmission factor Tᵥ that is lower than or equal to any one of the following values: 79%, 78 %, 43%, 18%, 8%, 5%. In the example provided, the visible light mean transmission factors Tᵥ comprised between 21 and 27, preferably between 23 and 26 and corresponds to sunglasses of class 2.

The Tv is the luminous transmittance, defined in the ISO 13666:1998 standard as the ratio of the luminous flux transmitted by the lens to the incident luminous flux.

According to one embodiment, the reflective coating is monolayer coating such as a monolayer of silver, gold, titanium, niobium, silicon, aluminum, nickel-chromium alloy (NiCr), stainless steel, or their alloys.

Preferably, to obtain different kinds of reflected colors, the reflective coating 30 is a multilayer coating, preferably a multilayer interferential coating 30 comprising at least two layers having a low refractive index which is lower than 1.55, defined as "LI layer", and at least two layers having a high refractive index which is equal to or higher than 1.55, defined as "HI layer", wherein the refractive indexes are expressed at 25°C at a wavelength of 550 nm.

More preferably, the different layers thicknesses and/or materials of the multilayered interferential coating 30 is chosen such as the optical article exhibits specific color parameters c*, and interferential h*.

For the purposes of the invention, C* parameters are defined in the international colorimetric CIE L*a*b* (1976) taking the standard illuminant D65 into account for an angle of incidence of 15°.

For the purposes of the invention, hue values are defined in the international colorimetric CIE L*a*b* (1976) taking the standard illuminant D65 into account for an angle of incidence of 15°.

The hue of the optical product according to the invention, is preferably comprised:
- between 210° and 330° providing a blue reflected color, more preferably between 245° and 270°, even more preferably between 250° and 260°, or
- between 100° and 120° providing a gold reflected color, or
- between 80° and 90° providing a green reflected color.

Furthermore, in preferred embodiments providing the above mentioned colors, the chroma is higher than 2. For another preferred embodiment providing a silver color, the chroma is below 2.

Now, the structure of the LI and HI layer(s) of the multilayer coating or interferential (IF) coating will be described hereafter.

HI layers and LI layers don't need to alternate with each other in the stack of the IF coating, although they also may, according to one embodiment of the invention. Two HI layers (or more) may be deposited onto each other, as well as two LI layers (or more) may be deposited onto each other. In general, the HI layers and LI layers alternate with each other in the stack of the IF coating according to one embodiment of the invention.

In the present application, when two HI layers (or more) are deposited onto each other, they are not considered as being a single HI layer when counting the number of layers of the interferential stack. The same applies to stacks of two or more adjacent LI layers.

It is here a simple stack, since the layer total number in the IF coating (including the outermost LI sheet) is higher than or equal to 4 and in general lower than or equal to 10.

According to an aspect of the invention, the total number of HI and LI layers in the IF coating is higher than or equal to 4, preferably higher than or equal to 6, more preferably higher than or equal to 7 and typically higher than or equal to 8.

According to another aspect of the invention, the total number of HI and LI layers in the IF coating is lower than or equal to 10, especially lower than or equal to preferably lower than or equal to 8, more preferably lower than or equal to 8 and typically lower than or equal to 6.

For instance, the total number of HI and LI layers in the IF coating ranges from 4 to 10 layers, preferably from 6 to 8 layers.

The HI layers can be conventional high-refractive-index layers, well known in the art. They generally contain one or more mineral oxides such as, in a non-limiting manner, zirconia (ZrO₂), titanium oxide (TiO₂), trititanium pentoxide (Ti₃O₅), alumina (Al₂O₃), tantalum pentoxide (Ta₂O₅), neodymium oxide (Nd₂O₅) , praseodymium oxide (Pr₂O₃), praseodymium titanate (PrTiO₃), La₂O₃, Nb₂O₅, or Y₂O₃. Optionally the high-index layers may also contain silica or other low-refractive-index materials, provided that their refractive index is higher than 1.6 as indicated above. Preferred materials are TiO₂, PrTiO₃, ZrO₂, Ta₂O₅, AI₂O₃, Y₂O₃ and their mixtures. Preferably, the one or more HI layers are made of zirconia (ZrO₂) or tantalum pentoxide (Ta₂O₅).

The LI layers can also be well-known low-refractive-index layers and may comprise, in a non-limiting manner: silicon oxide, or else a mixture of silica and alumina, in particular silica doped with alumina, the latter contributing to increase the thermal resistance of the UV-reflecting interference coating. Each LI layer is preferably a layer comprising at least 80% by weight silica and better still at least 90% by weight silica, relative to the total weight of the layer, and even better still consists of a silica layer (i.e.: not obtained by evaporation of at least one precursor compound, such as SiO₂, using electron-beam evaporation with introduction of oxygen gas in the vacuum chamber).

Optionally, the low-index layers may also contain high-refractive-index materials, provided that the refractive index of the resulting layer is lower than 1.55. When a LI layer comprising a mixture of SiO₂ and Al₂O₃ is used, it preferably comprises from 1% to 10% by weight, better still from 1% to 8% by weight and even better still from 1% to 5% by weight of Al₂O₃, with respect to the total weight of SiO₂ + Al₂O₃ in this layer. For example, SiO₂ doped with 4% or less Al₂O₃ by weight, or SiO₂ doped with 8% Al₂O₃ may be employed. Commercially available SiO₂ / Al₂O₃ mixtures may be used, such as the LIMA^{®} mixture sold by Umicore Materials AG (refractive index comprised between n = 1.48-1.50 to 550 nm) or the substance L5^{®} sold by Merck KGaA (refractive index n = 1.48 to 500 nm).

In general, the one or more LI layers can be made of silicon dioxide (SiO₂).

In general, the IF coating and the other layers of the optical article may be deposited by vapor phase deposition, under vacuum, in a vacuum deposition chamber, according to any of the following methods:
i) by evaporation, optionally under ion beam assistance;
ii) by ion-beam spraying;
iii) by cathode sputtering;
iv) by plasma-assisted chemical vapor deposition.

These various methods are described in the following references: "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

In general, the IF coating and the other layers of the optical article are deposited by evaporation, optionally under ion beam assistance.

Preferably, in the article according to the invention, the layers number of the multilayered coating 30 is equal to or lower than 10, preferably comprised between 6 and 8.

In the article of the invention, the multilayered coating 30 can comprise from 6 to 8 alternating layers of CrO₂, SiO₂, or 6 alternating layers of SiO₂, TiO₂.

Preferably, when the multilayered coating (30) gives the blue color, it comprises the following eight layers in order of deposition (from the glass substrate) :
CrO₂, SiO₂, CrO₂, SiO₂, CrO₂, SiO₂, CrO₂, SiO₂, preferably respectively having the following thickness:

CrO₂ 84.9 nm

SiO₂ 279.6 nm

CrO₂ 84.9 nm

SiO₂ 279.6 nm

CrO₂ 170.2

SiO₂ 279, 6 nm

CrO₂ 170.2 nm

SiO₂ 279.6.

Alternatively, when the multilayered coating (30) gives the blue color, it can comprise the following eight layers in order of deposition (from the glass substrate) : CrO₂, SiO₂, CrO₂, SiO₂, CrO₂, SiO₂, CrO₂, SiO₂, preferably respectively having the following thickness :

CrO₂ 164.2 nm

SiO₂ 268.1 nm

CrO₂ 163.2 nm

SiO₂ 268.1 nm

CrO₂ 163.2 nm

SiO₂ 268.1 nm

CrO₂ 81.6 nm

SiO₂ 134.0 nm.

Preferably, when the multilayered coating (30) gives the green color, it comprises the following layers in order of deposition (from the glass substrate):
CrO₂, SiO₂, CrO₂, SiO₂, CrO₂, SiO₂, preferably respectively having the following thickness:

CrO₂ 81 nm

SiO₂ 812 nm

CrO₂ 81 nm

SiO₂ 812 nm

CrO₂ 81 nm

SiO₂ 812 nm.

Preferably, when the multilayered coating (30) gives the gold color, it comprises the following layers in order of deposition (from the glass substrate):
SiO₂, TiO₂, SiO₂, TiO₂, SiO₂, TiO₂, preferably respectively having the following thickness:

SiO₂ 84.0 nm

TiO₂ 32.8 nm

SiO₂ 23, 4 nm

TiO₂ 31.3 nm

SiO₂ 136.9 nm

TiO₂ 10.2 nm.

Preferably, when the multilayered coating (30) gives the silver color, it comprises the following layers in order of deposition (from the glass substrate):
SiO₂, TiO₂, SiO₂, TiO₂, SiO₂, TiO₂, preferably respectively having the following thickness:

SiO₂ 42.0 nm

TiO₂ 32.8 nm

SiO₂ 11.7 nm

TiO₂ 31.3 nm

SiO₂ 68.4 nm

TiO₂ 5.1 nm.

Furthermore, the optical article of the invention can comprise a polarized film 60 interposed between two layers of adhesive layers 40, 50 of optical quality.

According to the invention, adhesive layers 40, 50 of optical quality are based on urethane-acrylate glues.

According to the invention, adhesive layers 40, 50 can have a thickness ranged from 60 to 80 µm.

The urethane-acrylate glues usable for the purposes of the present invention are glues known to one skilled in the art and commercially available. Preferably, the urethane-acrylate glue is a photocross-linkable glue, for example by radiation in the UV and/or Vis spectrum. For the purposes of the present invention, UV radiation means electromagnetic radiation having a wavelength in the range 280 nm - 380 nm (UV).

For the purposes of the present invention, Vis radiation means electromagnetic radiation having a wavelength in the range 380 nm - 780 nm (Vis).

Preferably, the urethane-acrylate glue can be any commercially available urethane-acrylate glue.

Preferably, the urethane-acrylate glue has a viscosity at +25°C of 450 - 650 mPa·s, measured using a Brookfield RVT viscometer, Spindle 2, at 20 revolutions per minute (RPM).

Generally, urethane-acrylate glues comprise at least one multifunctional polyisocyanate, at least one reactive acrylate monomer and at least one photoinitiator.

Advantageously, the multifunctional polyisocyanate is an acrylated polyisocyanate, preferably a triacrylated polyisocyanate, even more preferably it consists of the compound tris(2-hydroxyethyl)isocyanurate triacrylate.

Once the polymerization of the glue monomers is complete, the polymer obtained is characterized by one or more of the following properties: hardness (Hardness shore D (ASTM D2240): 60 - 75); tensile strength (ASTM D638: 16 - 22 N/mm²); elongation at break (30-70%).

Preferably, the reactive monomers are acrylate and/or methacrylate monomers, even more preferably said monomers are chosen from 2-hydroxyethyl methacrylate (HEMA), isobornyl acrylate and mixtures thereof.

The photo-initiator is a compound capable of directly absorbing incident light and fragmenting to form free radicals capable of starting the polymerization reaction with the formation of the final adhesive layer. Preferably, the photoionizer is phenyl bis(2,4,6-trimethylbenzoyl)-phosphine oxide.

In one embodiment, the urethane-acrylate glue may also comprise one or more solvents, for example 2-methoxy-1-methylethyl acetate (PMA).

The urethane-acrylate glue may also include one or more UV-blocking compounds, for example to provide eye protection by filtering ultraviolet rays. The UV-blocking compound can be, for example, benzotriazole or one of its derivatives, which is able to block UV light up to wavelengths of 400 nm.

According to a second aspect, the present invention also relates to a method for manufacturing an optical article, said method comprising:
a) providing an optical article 10 comprising a front glass base element 1 and a rear glass base element 2, each comprising a rear surface 11; 21 and a front surfaces 12;22,
b) roughing, lapping and polishing the rear and front surfaces 21, 22 of the rear base element 2 and the front surface 12 of the front glass base element 1, defining smooth surfaces configured for specular transmission of incident light,
c) roughing, lapping and not polishing the rear surface (11) of the front glass base element 1 defining a textured and rough surface,
d) depositing a reflective coating 30 on the rear lapped surface 11 of the front base element 1, conforming the shape of the textured surface 11, for reflecting light in a diffuse manner,
e) applying at least one adhesive layer of optical quality 40,50 at the rear side 31 of the reflective coating 30, wherein the rear side 31 of the reflective coating 30 is in the opposite side with respect to the front glass base element 1,
f) fixing the rear glass base element 2 to the multilayered coating 30 via said at least one adhesive layer 40,50,
g) measuring an haze value of the product obtained at the step f)
h) validating said product as an optical article if the measured haze value is below 2, more preferably comprised between 1.1 and 1.9, preferably between 1.4 and 1.8, even more preferably between 1.5 and 1.8, disregarding said product if the haze value is above 2.
Preferably, in the aforementioned method, after the phase c) and before the phase d) the optical article is subjected to a phase of chemical hardening.
Preferably, the reflective coating 30 is a multilayer interferential coating 30 comprising at least two layers having a low refractive index which is lower than 1.55, and at least two layers having a high refractive index which is equal to or higher than 1.55, wherein the refractive indexes being expressed at 25°C at a wavelength of 550 nm, and wherein the step of validating comprises a step of optimizing the thickness and/or number of layers of the multilayer coating until the measured haze value is below 2, more preferably comprised between 1.1 and 1.9, preferably between 1.4 and 1.8, even more preferably between 1.5 and 1.8.
Preferably, in the process of validation of the multilayer coating it is evaluated:
- at first the haze of the optical product comprising the latter (should be below 2),
- at second the matt effect (should be present: a "milky" appearance of the reflection, i.e. as evidence more diffuse than a specular reflection), and
- ideally, at third the obtained reflected colour (should match the targeted colorimetric parameters).

According to a preferred embodiment of the invention, the method further comprises depositing a polarized film (60) between two layers of adhesive layers (40, 50) of optical quality.

Furthermore, in the method according to the invention, the multilayered coating 30 on the rear surface (11) can be implemented by physical vapor deposition.

In particular, the multilayered coating 30 can comprise at least one metallic based layer, and the deposition of the multilayered coating 30 on the rear lapped surface 11 can be implemented by physical vapor deposition (PVD) with controlled oxygen flow during the metallic layer deposition.

The present invention will now be described in an illustrative, but non-limiting manner, according to its preferred embodiments.

### Examples

### Example 1: Optical article according to the invention

The Applicant has developed a transparent optical article, especially an ophthalmic lens being a spectacle lens, comprising a mineral or glass substrate and comprising an interferential multilayered coating, which is able to and/or configured to, together with a specific textured surface of the substrate, exhibit for a wearer an haze value allowing a maximum comfort, and for an observer a matte mirror effect, with specific colors, and to do so without compromising not only the mechanical performances of the optical article, its cosmetic appearance, but also the industrial feasibility of its manufacture.

The optical article is such as defined in the set of claims and comprises:
- a front glass base element 1 comprising a rear surface 11, and a front surface 12 opposite to the rear surface 11, the front surface 12 being smooth and configured for the specular transmission of incident light,
- a reflective coating 30 deposited on the rear surface 11 of the front glass base element 1,
- two adhesive layer 40,50 of optical quality applied at the rear side 31 of the reflective coating (30), wherein the rear side 31 of the reflective coating (30) is in the opposite side with respect to the front glass base element 1,
- a rear glass base element 2 intended to be closest to an individual's eyes when the optical article is worn by a subject, comprising a rear surface 21 and a front surfaces 22, wherein the front surface 22 adheres to the reflective coating 30 via said adhesive layer 50 and the rear surface 21 is opposite to the front surface 22, both surfaces 21,22 being smooth and configured for the specular transmission of incident light,
wherein
the rear surface 11 of the front glass base element (1) is textured and rough,
the reflective coating 30 takes the form of the textured and rough rear surface 11 and is configured for reflecting light in a diffuse manner.

### Example 2: mirroring tests A (blue), B (gold) and C (green)

Different trials were prepared with different coating materials and different thickness of each layer of said coating.

The coating was applied on the rough rear surface 11 of the front glass base element 1.

The common feature between each trial is the fact that both surfaces of the rear glass base element 2 and the front surface 12 of the front glass base element 1 are smoothed by roughing, lapping and polishing, reaching a roughness of and that the rear surface of the front glass base element 1 is rough because it was subjected only to roughing and lapping and not to polishing. Each trial comprises a polarizing film, in particular a grey film having a Tv of 30%.

### Test A: blue colour

Trials 1, 2, 3, 4, 11 and 12 and L1S1P1 were prepared in order to confer the blue colour to the reflected color of the lens.

Table 1 shows the material and the thickness of each layers of the coating.

**TABLE 1**

| | | | **L1S1P1** | **Trial 1** | **Trial 2** | **Trial 4** | **Trial 11** | **Trial12** |
|---|---|---|---|---|---|---|---|---|
| **layer** | **material** | | **thickne ss (nm)** | **thickne ss (nm)** | **thickne ss (nm)** | **thickne ss (nm)** | **thickness (nm)** | **thickne ss (nm)** |
| | Mineral glass | Refra ctive index | | | | | | |
| 1 | CrO₂ | 2.50 | 164.2 | 164.2 | 164.2 | 82.1 | 164.2 | 84.9 |
| 2 | SiO₂ | 1.46 | 268.1 | 268.1 | 268.1 | 268.1 | 268.1 | 279.6 |
| 3 | CrO₂ | 2.50 | 163.2 | 163.2 | 163.2 | 163.2 | 163.2 | 84.9 |
| 4 | SiO₂ | 1.46 | 268.1 | 268.1 | 268.1 | 268.1 | 268.1 | 279.6 |
| 5 | CrO₂ | 2.50 | 163.2 | 163.2 | | 163.2 | 163.2 | 170.2 |
| 6 | SiO₂ | 1.46 | 268.1 | 268.1 | | 268.1 | 268.1 | 279.6 |
| 7 | CrO₂ | 2.50 | 163.2 | | | 163.2 | 81.6 | 170.2 |
| 8 | SiO₂ | 1.46 | 268.1 | | | 268.1 | 134.0 | 279.6 |
| | | | | | | | | |

| | **aesthetic al matt effect** | | **Not present** | **poorly visible** | **Not present** | | **Good but color improvable** | **good** |
|---|---|---|---|---|---|---|---|---|
| | **haze value** | | **ok** | **ok** | **ok** | **bad** | **ok** | **ok** |
| | | | 0.5 | | 0.6 | 2.1 | 1.4 | 1.5 |
| | **L*** | | 58.4 | | 58.4 | 54.8 | 56.6 | 56.3 |
| | **a*** | | 0.7 | | -2.0 | -2.8 | -4.0 | -3.3 |
| | **b*** | | 7.2 | | 3.0 | 18.2 | 11.8 | 14.0 |
| | **c*** | | 7.2 | | 3.6 | 18.4 | 12.4 | 14.4 |
| | **h (°)** | | 260.7 | | 261.3 | 269.7 | 280.8 | 274.7 |
| | **Tv%** | | 26.2 | | 27.0 | 23.3 | 25.1 | 24.2 |

For the purposes of the invention, L* value, a* and b* values are defined according to the international colorimetric CIE L*a*b* for an incident angle of 15°, taking the standard illuminant D65 into account.

As shown in Table 1, only trial 4 provides a bad haze value, it is discarded.

The other trials have an haze below 2:
- the two ones with an haze value above or equal to 1.4 (and still below 2) have a satisfying matte effect (trials 11 and 12): they are validated and are considered as an optical article according to the invention. Trial 12 gives the best result both for the haze, for the aesthetical matt effect and for the intensity of the blue color hue 256 and chroma 14.4 compared to 251.5° and 12.4 for trial 11.
- the two last have an haze value below 1.4, more specifically 0.5 (L1S1P1) and 0.6 (trial 2) and have no matte effect present, they are discarded

### Test B: gold/silver color

Trials 5, 6, 7, 8, 10 and 15 were prepared in order to confer the gold or silver reflected colour to the lens.

Table 2 shows the material and the thickness of each layers of the coating.

**TABLE 2**

| | | | **Trial 5** | **Trial 6** | **Trial 7** | **Trial 8** | **Trial 15** |
|---|---|---|---|---|---|---|---|
| **lay er** | **material** | **Refrac tive index** | **thickness (nm)** | **thickness (nm)** | **thickness (nm)** | **thickness (nm)** | **thickness (nm)** |
| | Mineral glass | | | | | | |
| 1 | SiO2 | 1.46 | 84.0 | 84.0 | 42.0 | 84.0 | 84.0 |
| 2 | TiO2 | 2.35 | 65.6 | 65.6 | 32.8 | 32.8 | 32.8 |
| 3 | SiO2 | 1.46 | 23.4 | | 11.7 | 23.4 | 23.4 |
| 4 | TiO2 | 2.35 | 62.7 | | 31.3 | 62.7 | 31.3 |
| 5 | SiO2 | 1.46 | | | 68.4 | 136.9 | 136.9 |
| 6 | TiO2 | 2.35 | | | 5.1 | 5.1 | 10.2 |
| | | | | | | | |

| | **aesthetical matt effect** | | | **Not present** | **good** | **good** | **good** |
|---|---|---|---|---|---|---|---|
| | **haze value** | | **bad** | **ok** | **ok** | **bad** | **ok** |
| | | | 3.0 | 1.9 | 1.9 | 2.0 | 1.1 |
| | **L*** | | 57.0 | 55.3 | 56.8 | 57.6 | 55.2 |
| | **a*** | | -2.6 | -1.1 | -1.4 | -4.3 | -2.8 |
| | **b*** | | 10.8 | 2.0 | 1.3 | 4.4 | 6.0 |
| | **c*** | | 11.1 | 2.3 | 1.9 | 6.1 | 6.6 |
| | **h (°)** | | 84,9 | 67,7 | 47,7 | 50,6 | 72,2 |
| | **Tv%** | | 25.8 | 23.2 | 25.2 | 26.2 | 23.3 |

Trial 5 with an haze value of 3.0 i.e. above 2, is disregarded.

Trial 8 has a bad hazeresult (haze value equal to or higher than 2are disregarded).

Trial 6 has an acceptable haze value but the matt effect is not present.

As shown in Table 2, trials 7 (that provides a silver color) and 15 (gold color) provide a good haze value and a good matt effect, they are validated as optical product according to the invention.

### Test C: green colour

Trial 16 was prepared in order to confer the green reflected colour to the lens.

Table 3 shows the material and the thickness of each layers of the coating.

**TABLE 3**

| | **material** | | **Trials 16** |
|---|---|---|---|
| **layer** | **composition** | **Refractive index** | **thickness (nm)** |
| | Mineral glass | | |
| 1 | CrO2 | | 81 |
| 2 | SiO2 | 1.46 | 812 |
| 3 | CrO2 | 2.50 | 81 |
| 4 | SiO2 | 1.46 | 812 |
| 5 | CrO2 | 2.50 | 81 |
| 6 | SiO2 | 1.46 | 812 |

| | | **quality results** | |
|---|---|---|---|
| | **aesthetical matt effect** | | **good** |
| | **haze value** | | **ok** |
| | | | 1.5 |
| | **L*** | | 55.7 |
| | **a*** | | 0.1 |
| | **b*** | | 2.4 |
| | **c*** | | 2.4 |
| | **h(°)** | | 97 |
| | **Tv%** | | 23.7 |

The configuration showed in table 3 confers both a good haze value (below 2 i.e. 1.5) and a good aesthetical matt effect. This trial 16 is validated as an optical article according to the invention

### Example 3: measurement of roughness in a polished (reference) and in a not-polished cluster

The roughness of a cluster subjected to roughing, lapping and polishing and of a cluster subjected only to roughing and lapping has been measured.
In both cluster, the roughing step has been carried out using a grinding machine and by setting a run of 2 mm and a speed of 0.06 mm/s. The results are showed in table 4.

**TABLE 4**

| **Cluster** | **Measurement side** | **Sample** | **Ra [µm]** | **Rq [µm]** | **RSm [µm]** | **RDq** |
|---|---|---|---|---|---|---|
| Reference Polished Glass | rear | 1 | 0.02 | 0.03 | 18.17 | 0.02 |
| Reference Polished Glass | rear | 2 | 0.02 | 0.03 | 54.42 | 0.02 |
| Reference Polished Glass | rear | 3 | 0.02 | 0.03 | 42.79 | 0.02 |
| Reference Polished Glass | rear | 4 | 0.02 | 0.03 | 27.13 | 0.02 |
| Reference Polished Glass | rear | 5 | 0.02 | 0.03 | 14.53 | 0.02 |
| Reference Polished Glass | rear | 6 | 0.02 | 0.03 | 28.67 | 0.02 |
| Reference Polished Glass | rear | 7 | 0.02 | 0.03 | 23.02 | 0.02 |
| Reference Polished Glass | rear | 8 | 0.02 | 0.03 | 54.72 | 0.02 |
| Reference Polished Glass | rear | 9 | 0.02 | 0.03 | 34.39 | 0.02 |
| Reference Polished Glass | rear | 10 | 0.02 | 0.03 | 38.43 | 0.02 |
| Not Polished Glass | rear | 1 | 0.36 | 0.45 | 24.40 | 0.28 |
| Not Polished Glass | rear | 2 | 0.42 | 0.54 | 29.78 | 0.29 |
| Not Polished Glass | rear | 3 | 0.39 | 0.57 | 29.60 | 0.28 |
| Not Polished Glass | rear | 4 | 0.33 | 0.41 | 23.37 | 0.26 |
| Not Polished Glass | rear | 5 | 0.39 | 0.49 | 29.92 | 0.29 |
| Not Polished Glass | rear | 6 | 0.34 | 0.44 | 25.18 | 0.27 |
| Not Polished Glass | rear | 7 | 0.38 | 0.47 | 29.66 | 0.27 |
| Not Polished Glass | rear | 8 | 0.37 | 0.47 | 30.21 | 0.29 |

The definition of the roughness parameters reported in table 4 are included in BS EN ISO 4287:2000 British standard, identical with the ISO 4287:1997 standard.

The Ra average for the reference polished glass is 0.02 um with a standard deviation of 0.00, while the Ra average for the not-polished glass is 0.37 with a standard deviation of 0.03.

The Rq average for the reference polished glass is 0.03 µm with a standard deviation of 0.00, while the Rq average for the not-polished glass is 0.47 with a standard deviation of 0.04.

The RSm average for the reference polished glass is 33.6 with a standard deviation of 14.0, while the RSm average for the not-polished glass is 27.8 with a standard deviation of 2.9.

The RDq average for the reference polished glass is 0.02 µm with a standard deviation of 0.28, while the RDq average for the not-polished glass is 0.28 with a standard deviation of 0.01.

## Claims

1. Optical article comprising:
- a front glass base element (1) comprising a rear surface (11), and a front surface (12) opposite to the rear surface (11), the front surface (12) being smooth and configured for the specular transmission of incident light,
- a reflective coating (30) deposited on the rear surface (11) of the front glass base element (1),
- at least one adhesive layer (40,50) of optical quality applied at the rear side (31) of the reflective coating (30), wherein the rear side (31) of the reflective coating (30) is in the opposite side with respect to the front glass base element (1),
- a rear glass base element (2) intended to be closest to an individual's eyes when the optical article is worn by a subject, comprising a rear surface (21) and a front surfaces (22), wherein the front surface (22) adheres to the reflective coating (30) via said at least one adhesive layer (40, 50) and the rear surface (21) is opposite to the front surface (22), both surfaces (21,22) being smooth and configured for the specular transmission of incident light,
wherein
the rear surface (11) of the front glass base element (1) is textured and rough,
the reflective coating (30) takes the form of the textured and rough rear surface (11) and is configured for reflecting light in a diffuse manner,
and wherein the haze value of the optical article is less than 2.

2. Article according to claim 1, wherein the haze value of the optical article is comprised between 1.1 and 1.9, preferably between 1.4 and 1.8, even more preferably between 1.5 and 1.8.

3. Article according to claim 1 or 2, wherein the roughness Ra of the rear surface (11) of the front base element (1) ranges from 0.30 to 0.45 µm, preferably from 0.35 to 0.4 um, and/or the roughness Rq of the rear surface (11) of the front base element (1) ranges from 0.40 to 0.55 um, preferably from 0.45 to 0.50 um, and/or the roughness RDq of the rear surface (11) of the front base element (1) ranges from 0.25 to 0.35, preferably from 0.27 to 0.30.

4. Article according to any one of the preceding claims, wherein the roughness Ra, and/or Rq and/or RDq of the rear glass base element 2 front (21) and rear (22) surfaces, and the front surface 12 of the front glass base element 1 ranges from 0.01 to 0.10, preferably from 0.01 to 0.05.

5. Article according to any one of the preceding claims wherein the reflective coating is a multilayer coating (30), preferably a multilayer interferential coating (30) comprising at least two layers having a low refractive index which is lower than 1.55, and at least two layers having a high refractive index which is equal to or higher than 1.55, wherein the refractive indexes are expressed at 25°C at a wavelength of 550 nm.

6. Article according to the preceding claim wherein, the different layers thicknesses and/or materials of the multilayered interferential coating (30) is chosen such as a reflected color observed from the front surface (12) of the front glass base element (1), exhibits specific chroma c* and specific hue h* measured in the CIE L*, a*, b* color system.

7. Article according to the preceding claim, wherein the hue is comprised between
- 210° and 330° providing a blue reflected color, more preferably between 245° and 270°, even more preferably between 250° and 260°, or between
- 100° and 120° providing a gold reflected color, or between
- 80° and 90° providing a green reflected color.

8. Article according to the preceding claims 6 or 7, wherein the chroma is comprised between 5 and 15.

9. Article according to anyone of the claims 5 to 8, wherein the layers number of the multilayered coating (30) is equal to or lower than 10, preferably comprised between 6 and 8.

10. Article according to any one of the preceding claims 5 to 9, wherein the multilayered coating (30) comprises from 6 to 8 alternating layers of CrO₂, SiO₂, or 6 alternating layers of SiO₂, TiO₂.

11. Article according to any one of the preceding claims wherein a polarized film (60) is interposed between two layers of adhesive layers (40, 50) of optical quality.

12. Method for manufacturing an optical article according to any one of the preceding claims, said method comprising:
a) providing an optical article (10) comprising a front glass base element (1) and a rear glass base element (2), each comprising a rear surface (11;21) and a front surfaces (12;22),
b) roughing, lapping and polishing the rear and front surfaces (21, 22) of the rear base element (2) and the front surface (12) of the front glass base element (1), defining smooth surfaces configured for specular transmission of incident light,
c) roughing, lapping and not polishing the rear surface (11) of the front glass base element (1) defining a textured and rough surface,
d) depositing a reflective coating (30) on the rear lapped surface (11) of the front base element (1), conforming the shape of the textured surface (11), for reflecting light in a diffuse manner,
e) applying at least one adhesive layer of optical quality (40,50) at the rear side (31) of the reflective coating (30), wherein the rear side (31) of the reflective coating (30) is in the opposite side with respect to the front glass base element (1),
f) fixing the rear glass base element (2) to the multilayered coating (30) via said at least one adhesive layer (40,50),
g) measuring an haze value of the product obtained at the step f)
h) validating said product as an optical article if the measured haze value is below 2, more preferably comprised between 1.1 and 1.9, preferably between 1.4 and 1.8, even more preferably between 1.5 and 1.8, disregarding said product if the haze value is above 2.

13. Method according to the preceding claim, wherein the reflective coating (30) is a multilayer interferential coating (30) comprising at least two layers having a low refractive index which is lower than 1.55, and at least two layers having a high refractive index which is equal to or higher than 1.55, wherein the refractive indexes being expressed at 25°C at a wavelength of 550 nm, and wherein the step of validating comprises a step of optimizing the thickness and/or number of layers of the multilayer coating until the measured haze value is below 2, more preferably comprised between 1.1 and 1.9, preferably between 1.4 and 1.8, even more preferably between 1.5 and 1.8.

14. Method according to claim 12 or 13 wherein after the phase c) and before the phase d) the optical article is subjected to a phase of chemical hardening.

15. Method according to any one of claims from 12 to 14, wherein the reflective coating (30) on the rear surface (11) is implemented by physical vapor deposition.
